# FASCICULE DE BREVET EUROPEEN

(11) **EP 3 571 072 B1**
(45) Date de publication et mention de la délivrance du brevet: **21.10.2020**
(21) Numéro de dépôt: 18703060.6
(22) Date de dépôt: 16.01.2018
(51) Int. Cl.: B60H 1/00, H02K 5/24, F04D 29/66

(54) **SUPPORT MOTEUR POUR PULSEUR DE VÉHICULE AUTOMOBILE**
MOTORLAGER FÜR KRAFTFAHRZEUGGEBLÄSE
MOTOR SUPPORT FOR MOTOR VEHICLE BLOWER

(30) Priorité: 23.01.2017 FR 1750511
(43) Date de publication de la demande: 27.11.2019
(73) Titulaire: Valeo Systemes Thermiques, 78322 Le Mesnil Saint-Denis Cedex (FR)
(72) Inventeur: GONTIER, Cyril, 78322 Le Mesnil Saint-Denis Cedex (FR); ESCOBEDO, Samuel, 78322 Le Mesnil Saint-Denis Cedex (FR); RUDLOFF, Emmanuel, 78322 Le Mesnil Saint-Denis Cedex (FR)
(74) Mandataire: Tran, Chi-Hai
(86) Numéro de dépôt international: PCT/FR2018/050107
(87) Numéro de publication internationale: WO 2018/134515

(56) Documents cités:
- FR-A1- 2 961 971

## Description

L'invention concerne un support moteur pour un pulseur d'air destiné à être monté sur un système de chauffage, ventilation et/ou climatisation de véhicule automobile.

Un tel support moteur comprend généralement une première bague, dite bague extérieure, configurée pour être fixée à une partie du système de chauffage, ventilation et/ou climatisation du véhicule automobile, telle qu'une volute du système.

Le support moteur comprend également une deuxième bague, dite bague intérieure, coaxiale à la bague extérieure, et configurée pour loger un moteur électrique. Ledit moteur électrique comprend notamment un arbre moteur sur lequel une roue de ventilation, par exemple de type centrifuge, est apte à être montée.

Il est connu que le support moteur comprend également une troisième bague pour maintenir en position le moteur dans le pulseur d'air.

Toutefois, un tel agencement est complexe et coûteux à fabriquer.

Un autre exemple est divulgué dans le document FR2961971.

Le but de l'invention est de remédier au moins partiellement à cet inconvénient.

A cet effet, l'invention a pour objet un support moteur selon la revendication 1.

Ainsi, le support moteur selon la présente invention permet un maintien du moteur par la bague intérieure seule, ce qui permet de supprimer la troisième bague.

Selon une autre caractéristique de l'invention, la bague intérieure comprend une pluralité de butées, dites butée centrale et butées d'extrémité, et la bague extérieure comprend une pluralité de surfaces d'appui, chacune desdites butées étant apte à coopérer avec au moins une desdites surfaces d'appui.

Selon une autre caractéristique de l'invention, la butée centrale forme avec chaque butée d'extrémité un angle obtus.

Selon une autre caractéristique de l'invention, au moins une butée de la bague intérieure comprend une paroi en regard de la surface d'appui de la bague extérieure et espacée de la surface d'appui d'une distance comprise entre 1 mm et 5 mm, et de préférence d'une distance de 2 mm.

Selon une autre caractéristique de l'invention, la bague intérieure comprend des nervures de rigidification.

Selon une autre caractéristique de l'invention, la bague intérieure comprend deux fenêtres d'équilibrage moteur diamétralement opposées.

Selon une autre caractéristique de l'invention, le dispositif de retenue axiale comprend une pluralité d'éléments de retenue axiale, chaque élément de retenue axiale faisant saillie axialement hors d'un corps principal de la bague intérieure depuis une base jusqu'à une tête, au moins l'une des butées comprenant une extrémité au moins partiellement en regard de ladite base de l'un des éléments de retenue axiale.

Selon l'invention, le support moteur comprend au moins un plot de découplage vibratoire disposé entre la bague intérieure et la bague extérieure.

Selon l'invention, la bague extérieure comprend un doigt d'amortissement présentant une extrémité au moins partiellement sphérique apte à coopérer avec ledit au moins un plot de découplage vibratoire.

Selon une autre caractéristique de l'invention, les bagues intérieure et extérieure sont coaxiales.

L'invention a également pour objet un pulseur d'air pour système de chauffage, ventilation et/ou climatisation de véhicule automobile, comprenant un support moteur tel que décrit précédemment, un moteur logé dans la bague intérieure, et un couvercle de protection du moteur et du support moteur.

L'invention a également pour objet un système de chauffage, ventilation et/ou climatisation pour véhicule automobile, comprenant un pulseur d'air tel que décrit précédemment, et une volute, la bague extérieure du support moteur étant solidaire de la volute.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue en perspective d'un pulseur d'air selon la présente invention, après assemblage ;
- la figure 2 illustre une vue en perspective du pulseur de la figure 1, partiellement assemblé ;
- la figure 3 illustre une vue en perspective d'un détail du pulseur de la figure 1 ;
- la figure 4 illustre une vue en perspective d'un pulseur d'air selon une variante de réalisation de l'invention ; et
- la figure 5 illustre une vue en perspective d'un intérieur d'un couvercle de protection du moteur.

### Pulseur

L'invention a pour objet un support moteur, référencé 1 sur les figures.

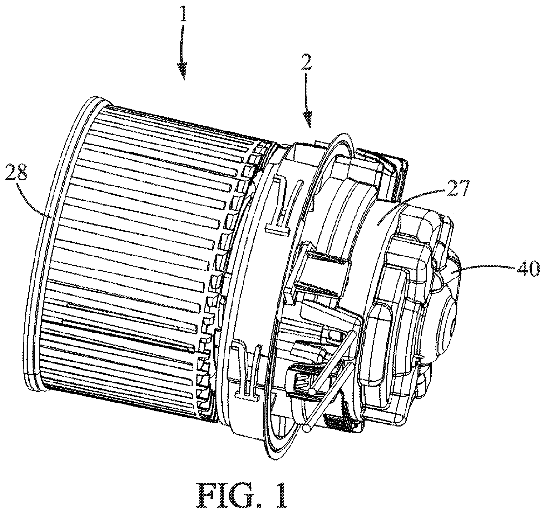

Comme visible sur les figures 1 à 3, le support moteur 1 comprend une première bague, dite bague extérieure, référencée 3.

Le support moteur 1 comprend également une deuxième bague, dite bague intérieure, référencée 4.

Les bagues extérieure 3 et intérieure 4 sont détaillées ultérieurement.

L'invention a également pour objet le pulseur 2 comprenant le support moteur 1.

Le pulseur 2 comprend un moteur (non illustré) logé dans la bague intérieure.

Le moteur est maintenu par des éléments de retenue du support moteur, détaillés ultérieurement.

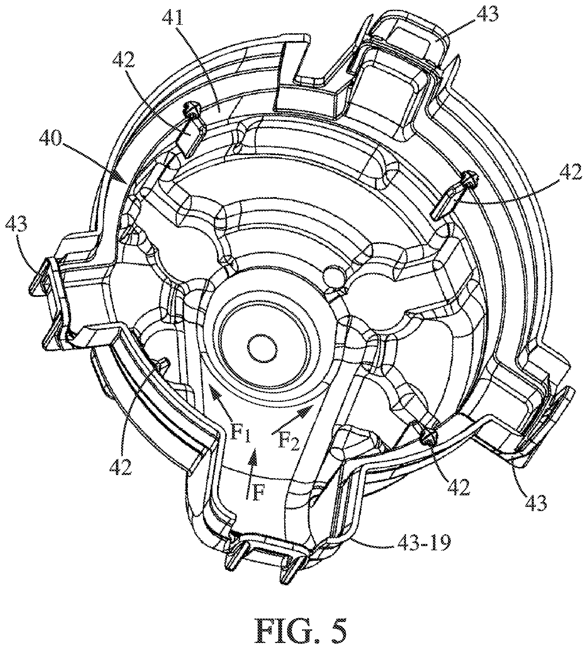

Le pulseur 2 comprend également un couvercle de protection du moteur et du support moteur 40, détaillé en référence à la figure 5.

Comme visible sur les figures, le pulseur 2 comprend une couronne 18 coaxiale des bagues intérieure 4 et extérieure 3, et solidaire de la bague extérieure 3.

La couronne 18 permet la fixation du pulseur à une partie d'un système de chauffage, ventilation et/ou climatisation pour véhicule automobile, tel qu'une volute, non représentée.

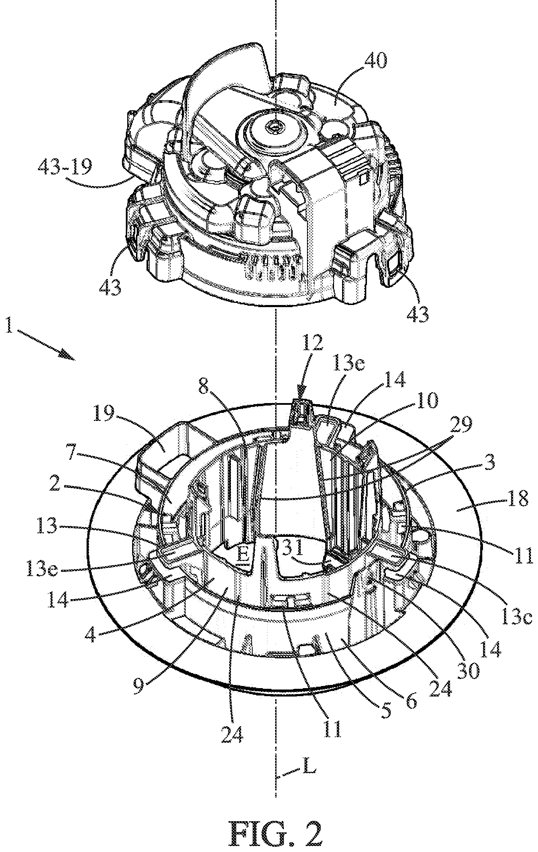

Un évidement 19, illustré sur la figure 2, est destiné à former un canal d'air de refroidissement du moteur.

### Support moteur

Comme déjà indiqué, le support moteur 1 comprend la bague extérieure 3 et la bague intérieure 4.

La bague extérieure 3 présente une forme sensiblement cylindrique délimitant un espace intérieur E.

La bague extérieure 3 est configurée pour être fixée à une partie du système de chauffage, ventilation et/ou climatisation du véhicule automobile, telle qu'une volute, non illustrée.

La bague intérieure 4 est disposée dans l'espace intérieur E en étant coaxiale de la bague extérieure 3.

La bague intérieure 4 est configurée pour loger le moteur électrique, par exemple à courant continu avec balais avantageusement muni d'un arbre moteur (non illustré) s'étendant dans la direction de coaxialité des bagues 3 et 4, dite direction axiale, L.

La bague extérieure 3 comprend un corps principal 5 sensiblement cylindrique.

Le corps principal 5 est une paroi délimitée par une face extérieure 6 et une face intérieure 7.

La bague intérieure 4 comprend un corps principal sensiblement cylindrique 8.

Le corps principal 8 est délimité par une paroi extérieure 9 et une paroi intérieure 10.

La face intérieure 7 de la bague extérieure 3 fait face à la paroi extérieure 9 de la bague intérieure 4.

Le support moteur 1 comprend également au moins un plot de découplage vibratoire 11 disposé entre la bague intérieure 4 et la bague extérieure 3.

Sur le mode de réalisation illustré, le support moteur 1 comprend quatre plots de découplage vibratoire 11.

Chaque plot de découplage vibratoire 11 prend appui sur la paroi intérieure 7 de la bague extérieure 3 et sur la paroi extérieure 9 de la bague intérieure 4.

Chaque plot de découplage vibratoire 11 présente une forme générale de H.

Chaque plot de découplage vibratoire 11 est de préférence en matériau élastomère.

Les plots de découplage vibratoire 11 permettent d'éviter que les vibrations engendrées par le moteur électrique soient transmises à la bague extérieure 3 du support moteur 1, et, par conséquent, au système de chauffage, ventilation et/ou climatisation du véhicule automobile.

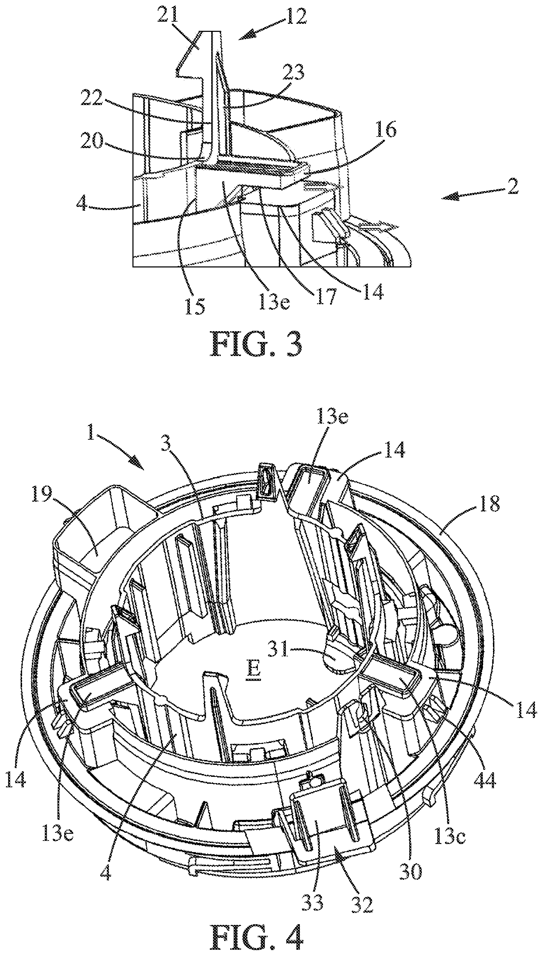

Comme particulièrement visible sur les figures 2 et 3, la bague intérieure 4 comprend un dispositif de retenue axiale du moteur, référencé 12.

La bague intérieure 4 comprend également au moins une butée 13.

La bague extérieure 3 comprend au moins une surface d'appui 14 associée à ladite au moins une butée 13.

Sur le mode de réalisation illustré, la bague intérieure comprend trois butées 13, une butée centrale 13c voisine de part et d'autre de deux butées d'extrémité, 13e.

Chaque butée 13 fait saillie radialement hors du corps principal 8 de la bague intérieure 4 dans un sens de rapprochement de la bague extérieure 3.

L'une 15 des extrémités de chaque butée 13 est solidaire du corps principal 8 tandis que l'autre extrémité 16 est libre.

L'extrémité libre 16 présente une surface plane 17 disposée face à la surface d'appui 14 associée de la bague extérieure 3.

Chaque surface d'appui 14 fait saillie radialement hors du corps principal 5 de la bague extérieure 3 dans un sens d'éloignement de la bague intérieure 4.

Chaque butée 13 contribue à bloquer le moteur en cas d'à coup du véhicule automobile, la butée 13 absorbant des vibrations par déplacement de son extrémité libre 16 ; et, pour des vibrations plus fortes, l'extrémité libre 16 de chaque butée 13 vient prendre appui contre la surface d'appui 14 associée de la bague extérieure 3.

Chaque butée 13 contribue à bloquer le moteur en cas d'à-coups du véhicule automobile. Ces à-coups provoquent des déplacements de la bague intérieure 4 plus importants que lors d'un fonctionnement normal. Ainsi, l'extrémité libre 16 de chaque butée 13 vient prendre appui contre la surface d'appui 14 associée de la bague extérieure 3.

Chaque butée 13 assure également que les plots en H ne soient pas trop sollicités au cours de la vie du véhicule.

La distance entre la surface plane de chaque butée 13 et la surface d'appui 14 associée est comprise entre 1 mm et 5 mm, et de préférence de l'ordre de 2 mm.

Au-delà de cette valeur, les plots en H ne tiennent pas en endurance.

Comme visible sur les figures, le dispositif de retenue axiale 12 comprend quatre éléments de retenue axiale 12, encore appelés clips de retenue.

Chaque clip de retenue présente une forme générale de crochet.

Chaque élément de retenue axiale 12 fait saillie axialement hors du corps principal 8 de la bague intérieure 4 depuis une base 20 jusqu'à une tête chanfreinée 21.

La tête chanfreinée 21 est destinée maintenir le moteur.

Chaque élément de retenue 12 présente une paroi longitudinale 22 munie d'une nervure longitudinale de rigidification 23 depuis la base 20 jusqu'à la tête 21.

La tête chanfreinée 21 est de préférence creuse, afin de faciliter le procédé de fabrication du support moteur 1.

De préférence, au moins l'une des butées 13 est disposée au moins partiellement en regard de la base 20 de l'un des éléments de retenue axiale 12.

Sur le mode de réalisation illustré, les deux butées d'extrémité 13e sont disposées partiellement en regard de la base 20 de l'un des éléments de retenue axiale 12.

Ainsi, l'extrémité 15 de ces butées 13 solidaire du corps principal 8 de la bague intérieure 4 s'étend à partir de la nervure de rigidification 23 dans un sens d'éloignement du clip de retenue 12.

Comme visible sur les figures, la paroi extérieure 9 de la bague intérieure 4 comprend des nervures axiales de rigidification 24.

Comme il ressort également des figures, la bague intérieure 4 comprend deux fenêtres d'équilibrage moteur diamétralement opposées.

Avantageusement, la paroi intérieure 10 de la bague intérieure 4 est munie de nervures de serrage radial du moteur 29.

Les nervures de serrage radial 29 sont de préférence inclinées relativement à la direction longitudinale L pour éviter toute dépouille pendant le démoulage du procédé de fabrication.

Comme visible sur la figure 2, le support moteur 1 comprend un trou 30 de passage de câble d'alimentation et/ou de commande du moteur.

Comme visible sur la figure 2, le support moteur 1 comprend également un ou plusieurs élément(s) de maintien 31 du moteur.

Chaque élément de maintien 31 présente une forme générale plane triangulaire arrondie.

Chaque élément de maintien 31 s'étend dans l'espace E principalement dans un plan orthogonal à l'axe L.

De préférence, le support moteur 1 comprend deux éléments de maintien 31 diamétralement opposés.

Sur la variante illustrée à la figure 4, le support moteur 1 comprend une entretoise 32 de maintien du pulseur un système de chauffage, ventilation et/ou climatisation de véhicule automobile.

L'entretoise 32 comprend deux parois 33 espacées l'une de l'autre, de sorte à former un logement de réception d'une paroi ou d'une saillie disposée sur un boitier de système de chauffage, ventilation et/ou climatisation de véhicule automobile.

### Couvercle de protection

Comme plus particulièrement visibles sur les figures 2 et 5, le couvercle de protection 40 comprend une paroi intérieure 41 destinée à couvrir le moteur et les bagues intérieure 4 et extérieure 3 du support moteur 1.

Comme visible sur la figure 5, la paroi intérieure 41 comprend une pluralité d'ergots de maintien du moteur, référencés 42.

Sur le mode de réalisation illustré, la paroi intérieure 41 comprend quatre ergots de maintien 42.

Le couvercle de protection comprend une pluralité (quatre sur la figure 5) d'éléments en saillie 43.

Chaque élément en saillie 43 est configuré pour coopérer avec des tétons 44 du support moteur, de sorte que les tétons 44 s'encliquètent dans les éléments en saillie 43.

Comme il ressort de la figure 5, l'un des éléments 43, noté 43-19, est destiné à couvrir l'évidement 19.

Comme visible sur la figure 5, le couvercle 40 permet de guider un flux d'air F en deux flux d'air F1 et F2.

La circulation de l'air selon les deux flux F1 et F2 assure un meilleur refroidissement du moteur.

### Procédés de fabrication du support moteur

La bague intérieure 4 et la bague extérieure 3 viennent de moulage.

Selon un premier procédé de fabrication, un moule à gaufre présente l'empreinte des deux bagues.

Une première étape consiste à fermer le moule. Puis, on insère des coulisseaux (afin de permettre le démoulage ultérieur des extrémités libres des butées), avant d'injecter la matière dans le moule.

Ensuite, on retire les coulisseaux, puis on démoule le support moteur 1 par ouverture du moule.

Selon un autre mode de fabrication, on recourt à un moule avec deux cavités différentes, l'un des moules ayant l'empreinte de la bague intérieure 4 et l'autre moule ayant l'empreinte de la bague extérieure 3, ce qui permet de s'affranchir de l'utilisation de coulisseau de démoulage des extrémités libres des butées 13.

Dans ce cas, on moule la bague extérieure 3 et la bague intérieure 4 indépendamment, un moule rotatif permettant de mettre en place la bague intérieure dans la bague extérieure grâce au mouvement rotatif du moule et on procède à un surmoulage de solidarisation des bagues.

### Avantages

Comme déjà indiqué, une seule pièce, à savoir la bague intérieure 4, assure toutes les fonctions de maintien de moteur, ce qui permet de ne pas complexifier la structure du support moteur, simplifie les procédés de fabrication et en réduit les coûts.

De plus, les butées assurant également une fonction de découplage vibratoire, elles contribuent à augmenter la durée de vie des plots en matériau élastomères et à réduire la transmission des vibrations vers l'habitacle du véhicule automobile.

Bien entendu, l'invention n'est pas limitée au mode de réalisation illustré.

Il est tout à fait envisageable que la bague intérieure comprenne des nervures destinées à coopérer avec des moyens de découplage en élastomère, par exemple parallélépipédique, munis d'évidements, de sorte que les nervures de la bague intérieure puissent s'insérer dans les évidements.

On note qu'un élément supplémentaire de découplage, tel qu'une membrane, obture l'espace entre la bague intérieure et la bague extérieure.

## Revendications

1. Support moteur pour un pulseur d'air d'un système de chauffage, ventilation et/ou climatisation de véhicule automobile, comprenant
une première bague (3), dite bague extérieure (3), et
une deuxième bague (4), dite bague intérieure (4), disposée à l'intérieur de ladite première bague,
la bague intérieure (4) étant configurée pour loger un moteur électrique, et la bague extérieure (3) étant configurée pour être fixée à une partie du système de chauffage, ventilation et/ou climatisation du véhicule automobile, ladite bague intérieure (4) comprenant un dispositif de retenue axiale (12) dudit moteur et au moins une butée (13) apte à coopérer avec une surface d'appui associée (14) de la bague extérieure (3),
le support moteur comprenant au moins un plot de découplage vibratoire (11) disposé entre la bague intérieure (4) et la bague extérieure (3),
**caractérisé en ce que**,
la bague extérieure (3) comprend au moins un doigt d'amortissement présentant une extrémité au moins partiellement sphérique apte à coopérer avec ledit au moins un plot de découplage vibratoire (11).

2. Support moteur selon la revendication 1, dans lequel la bague intérieure (4) comprend une pluralité de butées (13), et la bague extérieure (3) comprend une pluralité de surfaces d'appui (14), chacune desdites butées (13) étant apte à coopérer avec au moins une desdites surfaces d'appui (14).

3. Support moteur selon l'une des revendications précédentes, dans lequel au moins une butée (13) de la bague intérieure (4) comprend une paroi (17) en regard de la surface d'appui (14) de la bague extérieure (3) et espacée de la surface d'appui (14) d'une distance comprise entre 1 mm et 5 mm, et de préférence d'une distance de 2 mm.

4. Support moteur selon l'une des revendications précédentes, dans lequel la bague intérieure (4) comprend des nervures de rigidification (24).

5. Support moteur selon l'une des revendications précédentes, dans lequel la bague intérieure (4) comprend deux fenêtres d'équilibrage moteur diamétralement opposées.

6. Support moteur selon l'une des revendications précédentes, dans lequel le dispositif de retenue axiale (12) comprend une pluralité d'éléments de retenue axiale, chaque élément de retenue axiale (12) faisant saillie axialement hors d'un corps principal (8) de la bague intérieure (4) depuis une base (20) jusqu'à une tête (21), au moins l'une des butées (13) comprenant une extrémité (15) au moins partiellement en regard de ladite base (20) de l'un des éléments de retenue axiale (12).

7. Support moteur selon l'une des revendications précédentes, dans lequel les bagues intérieure (4) et extérieure (3) sont coaxiales.

8. Pulseur d'air pour système de chauffage, ventilation et/ou climatisation de véhicule automobile, comprenant un support moteur (1) selon l'une des revendications précédentes, un moteur électrique logé dans la bague intérieure et un couvercle (27) de protection du moteur et du support moteur (1).

## Patentansprüche

1. Motorlager für ein Heizungs-, Lüftungs- und/oder Klimasystem eines Kraftfahrzeugs, umfassend:
einen ersten Ring (3), Außenring (3) genannt, und
einen zweiten Ring (4), Innenring (4) genannt, der innerhalb des ersten Ringes angeordnet ist,
wobei der Innenring (4) dafür ausgebildet ist,
einen Elektromotor aufzunehmen, und der Außenring (3) dafür ausgebildet ist, an einem Teil des Heizungs-, Lüftungs- und/oder Klimasystems des Kraftfahrzeugs befestigt zu werden, wobei der Innenring (4) eine Vorrichtung zum axialen Halten (12) des Motors und wenigstens einen Anschlag (13), der geeignet ist, mit einer zugeordneten Anlagefläche (14) des Außenringes (3) zusammenzuwirken, umfasst,
wobei das Motorlager wenigstens ein Schwingungsentkopplungselement (11) aufweist, das zwischen dem Innenring (4) und dem Außenring (3) angeordnet ist,
**dadurch gekennzeichnet, dass**
der Außenring (3) wenigstens einen Dämpfungsfinger umfasst, der ein wenigstens teilweise kugelförmiges Ende aufweist, das geeignet ist, mit dem wenigstens einen Schwingungsentkopplungselement (11) zusammenzuwirken.

2. Motorlager nach Anspruch 1, wobei der Innenring (4) mehrere Anschläge (13) umfasst und der Außenring (3) mehrere Anlageflächen (14) umfasst, wobei jeder der Anschläge (13) geeignet ist, mit wenigstens einer der Anlageflächen (14) zusammenzuwirken.

3. Motorlager nach einem der vorhergehenden Ansprüche, wobei wenigstens ein Anschlag (13) des Innenringes (4) eine Wand (17) umfasst, die der Anlagefläche (14) des Außenringes (3) gegenüberliegt und von der Anlagefläche (14) um einen Abstand zwischen 1 mm und 5 mm und vorzugsweise um einen Abstand von 2 mm beabstandet ist.

4. Motorlager nach einem der vorhergehenden Ansprüche, wobei der Innenring (4) Versteifungsrippen (24) umfasst.

5. Motorlager nach einem der vorhergehenden Ansprüche, wobei der Innenring (4) zwei einander diametral gegenüberliegende Fenster zum Auswuchten des Motors umfasst.

6. Motorlager nach einem der vorhergehenden Ansprüche, wobei die Vorrichtung zum axialen Halten (12) mehrere Elemente zum axialen Halten umfasst, wobei jedes Element zum axialen Halten (12) axial aus einem Hauptkörper (8) des Innenringes (4) von einem Fuß (20) bis zu einem Kopf (21) vorsteht, wobei wenigstens einer der Anschläge (13) ein Ende (15) umfasst, das sich wenigstens teilweise gegenüber dem Fuß (20) eines der Elemente zum axialen Halten (12) befindet.

7. Motorlager nach einem der vorhergehenden Ansprüche, wobei der Innenring (4) und der Außenring (3) koaxial sind.

8. Luftgebläse für ein Heizungs-, Lüftungs- und/oder Klimasystem eines Kraftfahrzeugs, welches ein Motorlager (1) nach einem der vorhergehenden Ansprüche, einen in dem Innenring aufgenommenen Elektromotor und eine Abdeckung (27) zum Schutz des Motors und des Motorlagers (1) umfasst.

## Claims

1. Motor mount for an air blower of a heating, ventilation and/or air-conditioning system of a motor vehicle, comprising
a first ring (3), termed outer ring (3), and
a second ring (4), termed inner ring (4), arranged inside said first ring,
the inner ring (4) being configured to accommodate an electric motor, and the outer ring (3) being configured to be attached to a part of the heating, ventilation and/or air-conditioning system of the motor vehicle, said inner ring (4) comprising a device (12) for the axial retention of said motor and at least one stop (13) that is able to cooperate with an associated bearing surface (14) of the outer ring (3),
the motor mount comprising at least one vibratory decoupling pad (11) arranged between the inner ring (4) and the outer ring (3),
**characterized in that**
the outer ring (3) comprises at least one damping finger having an at least partially spherical end that is able to cooperate with said at least one vibratory decoupling pad (11).

2. Motor mount according to Claim 1, in which the inner ring (14) comprises a plurality of stops (13), and the outer ring (3) comprises a plurality of bearing surfaces (14), each one of said stops (13) being able to cooperate with at least one of said bearing surfaces (14).

3. Motor mount according to one of the preceding claims, in which at least one stop (13) of the inner ring (4) comprises a wall (17) facing the bearing surface (14) of the outer ring (13) and spaced apart from the bearing surface (14) by a distance of between 1 mm and 5 mm, and preferably by a distance of 2 mm.

4. Motor mount according to one of the preceding claims, in which the inner ring (4) comprises stiffening ribs (24) .

5. Motor mount according to one of the preceding claims, in which the inner ring (4) comprises two diametrically opposite motor balancing windows.

6. Motor mount according to one of the preceding claims, in which the axial retention device (12) comprises a plurality of axial retention elements, each axial retention element (12) projecting axially out of a main body (8) of the inner ring (4) from a base (20) to a head (21), at least one of the stops (13) comprising an end (15) that at least partially faces said base (20) of one of the axial retention elements (12) .

7. Motor mount according to one of the preceding claims, in which the inner ring (4) and the outer ring (3) are coaxial.

8. Air blower for a heating, ventilation and/or air-conditioning system of a motor vehicle, comprising a motor mount (1) according to one of the preceding claims, an electric motor accommodated in the inner ring and a cover (27) for protecting the motor and the motor mount (1).
